# EUROPEAN PATENT APPLICATION

(11) **EP 2 661 985 A1**
(43) Date of publication of application: **13.11.2013**
(21) Application number: 12425090.3
(22) Date of filing: 11.05.2012
(51) Int. Cl.: A47C 4/06, B60N 2/68

(54) **Seat backrest for a motor vehicle**

(71) Applicant: Fiat Group Automobiles S.p.A., 10135 Torino (TO) (IT)
(72) Inventor: Giani, Maurizio, 10135 Torino (IT)
(74) Representative: Lovino, Paolo

(57) **Abstract**

A seat backrest (1) for a motor vehicle having an inner structure (2) that supports the padding (3), which is externally upholstered by a lining (4); the backrest also has a rear covering panel (5), which is fastened to the inner structure (2), defines a rear face (6) of the backrest and is provided with a honeycomb sheet (21), which is substantially rigid and is made with a plastic material.

## Description

The present invention relates to a seat backrest. In particular, the present invention relates to a backrest of a rear seat in a motor vehicle.

As is known, the rear seats in motor vehicles define the front surface of the boot and therefore must be sufficiently robust to support the impact of luggage in the case of sharp braking and also in the event of an accident. To this end, the rear seats have padding, covered by a lining, and a rear structure, which supports the padding and is made of a metal material.

This metal structure normally comprises a tubular support element, which extends in a ring, and a sheet metal plate, which is substantially vertical and is placed behind the tubular support element and fastened to the latter, for example, by welding or snap fitting. Lastly, a rear trim panel can be provided to cover the rear surface of the backrest and define a decorative finishing facing the boot.

Going into greater detail, the following solutions are known:
- the lining also covers the sheet metal plate at the back, while the rear trim panel is made of a needle felt material and sewn to this lining; or
- the lining is fixed to the edge of the sheet metal plate, which is visible, without any rear trim panel; or
- the metal structure has a metal grid or mesh that replaces the sheet metal plate; at the same time, the rear trim panel is made of a needle felt material and sewn to the lining.

Current solutions that contemplate using a sheet metal plate are relatively heavy and entail relatively high costs for pressing the plates. On the other hand, in the solutions without a sheet metal plate, the rear trim panel in needle felt is flimsy and, with the passing of time, tends to become marked and/or worn by the luggage loaded in the boot, as no rigid surface that could support it is provided inside the backrest.

The object of the present invention is to provide a seat backrest that allows the above-described problems to be overcome in a simple and inexpensive manner.

According to the present invention, a seat backrest is produced, as defined in claim 1.

For a better understanding of the present invention a preferred embodiment will now be described, purely by way of non-limitative example, with reference to the attached drawings, where:
- Figure 1 shows, in section along a vertical section plane, a preferred embodiment of the seat backrest according to the present invention;
- Figure 2 shows, with parts removed for clarity, a detail of a rear panel of the backrest in Figure 1; and
- Figure 3 is a section that schematically shows a preferred type of connection for the rear panel in Figure 2.

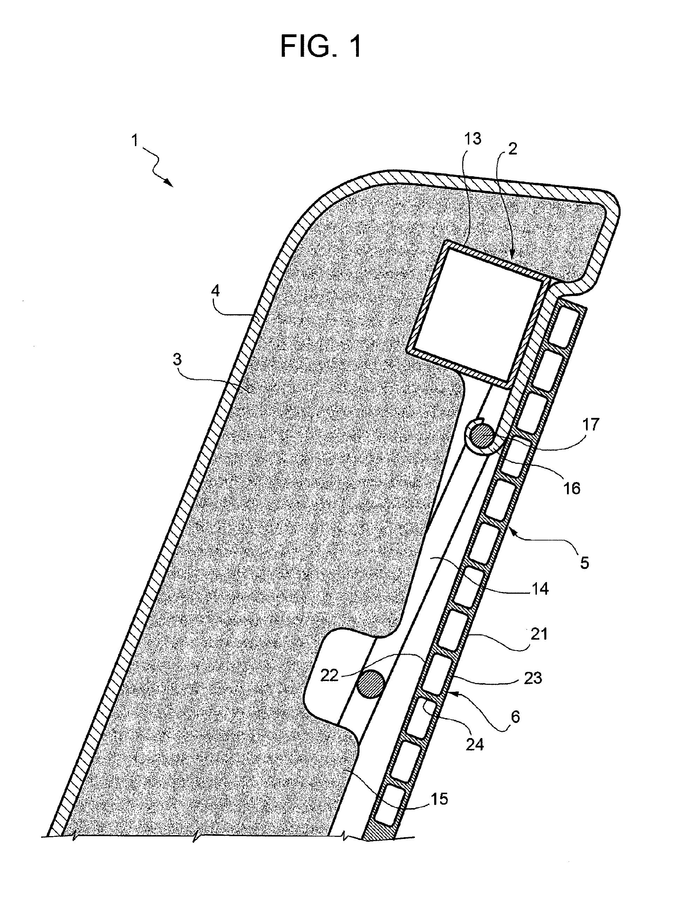

In Figure 1, reference numeral 1 indicates, as a whole, a seat backrest (partially shown), mounted on a last row of seats in a motor vehicle.

The backrest 1 comprises an inner structure 2, preferably made of a metallic material; padding 3 made, for example, from foam material, and supported by the inner structure 2; a lining 4 made, for example, from fabric, which frontally and laterally upholsters the padding 3; and a rear panel 5, which covers the inner structure 2 at the back and part of the lining 4 and defines a rear face 6 of the backrest 1 that frontally delimits a boot (not shown) of the motor vehicle.

The inner structure 2 comprises an element 13, which extends in a ring along the upper, lower and lateral edges of the padding 3. Element 13 is preferably a tubular element, having a closed cross-section.

Preferably, the inner structure 2 also comprises a grid or mesh 14, which is arranged in a central space defined by the ring-like shape of element 13, is fastened to element 13, by welding for example, and defines a support for a rear central portion 15 of the padding 3.

The lining 4 is fastened to the inner structure 2. In particular, the lining 4 has an end edge 16 that is covered by panel 5 and is fastened to the borders 17 of the grid 14 in a known manner, not described in detail. Alternatively, the lining 4 can completely envelope the rear part of the inner structure 2 and the padding 3 and/or be fastened to element 13.

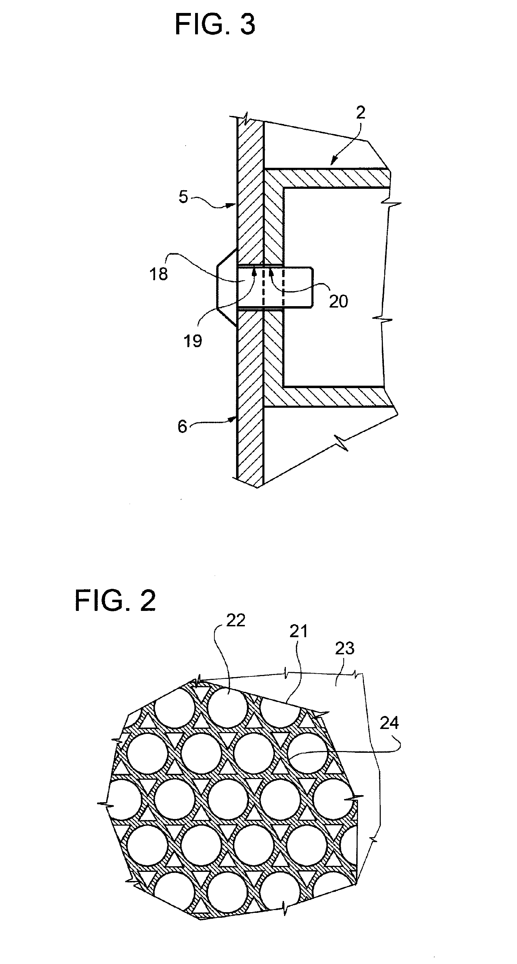

As schematically shown in in Figure 3, panel 5 is also fastened to the inner structure 2, for example, by pins or buttons 18 that are press-inserted in mutually coaxial holes 19 and 20 made in the panel 5 and element 13.

As shown in Figures 1 and 2, the panel 5 is defined by a honeycomb sheet 21, which is relatively rigid, and comprises a plastic material, preferably polypropylene.

The honeycomb sheet 21 is preferably of the closed-cell type. In particular, the cells are delimited by a front wall 22, facing the inner structure 2, a rear wall 23, facing the boot, and lateral walls 24. Walls 22 and 23 are continuous except for the holes 19, and are flat and parallel, while walls 24 are orthogonal to walls 22 and 23.

According to an embodiment variant (not shown), panel 5 is of the multilayer type, i.e. it comprises the honeycomb sheet 21 and at least one trim layer (not shown), which defines the rear face 6, is fixed to wall 23, for example by gluing or heat treatment, and is made, for example, of fabric.

According to a further embodiment variant not shown, panel 5 comprises another trim layer that is fastened to wall 22.

The thickness of the honeycomb sheet 21 is preferably between 4.3 mm and 5.3 mm.

By varying the size of the cells and/or the composition of the plastic material, it is possible to achieve extremely light weights, for example, between 1000 g/m² and 2000 g/m², but with a relatively high breaking strength and bending stiffness. For example, a breaking strength between 64.3 and 125.6 N and a bending stiffness between 11 N/mm and 20 N/mm can be achieved.

With regard to the material of the honeycomb sheet 21, this is preferably a composite material, for example:
- an opportune mix of polypropylene (PP) and polyphenylene ether (PPE);
- glass fibres, or fibres of another reinforcing material, dispersed in a matrix of a thermoplastic material.

From the foregoing, it is evident that the backrest 1 has a low weight with respect to known solutions provided with sheet metal plates, but still assures effective support for the luggage loaded in the boot thanks to the presence of the honeycomb sheet 21.

In particular, the panel 5 secures the luggage in the boot and does not yield, and so has a rear face 6 that substantially keeps its shape and decorative characteristics unchanged with the passage of time.

The plastic material and the cells of the honeycomb sheet 21 endow particular lightness without excessively compromising its mechanical characteristics. In addition, with closed cells, strength is increased and the honeycomb sheet 21 has continuous outer faces that can remain visible and be easily cleaned or can be used to firmly fasten plies of fabric trim.

In addition, the honeycomb sheet 21 is easy to connect to the inner structure 2, without any need to change the inner structures 2 normally used in known solutions.

Finally, from the foregoing, it is evident that modifications and variations can be applied to the backrest 1 described and illustrated herein without leaving the scope of protection of the present invention, as defined in the appended claims.

In particular, the fastening of the honeycomb sheet 21 to the inner structure 2 could be of a different type to that indicated; for example, it could be of the snap-fit type or use gluing.

To further improve the lightness of the inner structure 2, element 13 and/or the grid 14 could be made of materials other than the metallic one indicated above, but with adequate strength to not jeopardize safety requirements (in particular, the function of preventing passenger compartment intrusion by luggage in the rear boot) and seat comfort.

## Claims

1. A seat backrest (1) for a motor vehicle, the backrest comprising:
- an inner support structure (2);
- padding (3) supported by said inner support structure (2);
- a lining (4) that at least partially upholsters said padding (3) ;
- a rear covering panel (5), fastened to said inner support structure (2) and defining a rear face (6) of said backrest (1) ;
**characterized in that** said rear covering panel (5) comprises a honeycomb sheet (21), which is substantially rigid and comprises a plastic material.

2. A seat backrest according to claim 1, **characterized in that** said honeycomb sheet (21) is made of a composite material.

3. A seat backrest according to claim 2, **characterized in that** said composite material comprises a matrix of plastic material and reinforcement fibres dispersed in said matrix.

4. A seat backrest according to any of the preceding claims, **characterized in that** said honeycomb sheet (21) is of the closed cell type.

5. A seat backrest according to claim 4, **characterized in that** said honeycomb sheet (21) comprises a front wall and a rear wall (22 and 23) that are flat and parallel.

6. A seat backrest according to claim 5, **characterized in that** said cells are delimited by said front and rear walls (22 and 23) and by lateral walls (24), which are orthogonal to said front and rear walls (22 and 23).

7. A seat backrest according to claim 5 or 6, **characterized in that** said rear covering panel (5) comprises at least one layer that covers said rear wall (23).

8. A seat backrest according to any of claims 1 to 5, **characterized in that** said rear covering panel (5) is defined by said honeycomb sheet (21).

9. A seat backrest according to any of the preceding claims, **characterized in that** said rear covering panel (5) is fastened to said inner support structure (2) by press-fit pins (18).

10. A seat backrest according to any of the preceding claims, **characterized in that** said inner support structure (2) comprises an element (13) that extends in a ring along the edges of said padding (3), so as to define a central space, and a grid (14) fastened to said element (13) and arranged in said central space.
